# EUROPEAN PATENT APPLICATION

(11) **EP 4 657 631 A1**
(43) Date of publication of application: **03.12.2025**
(21) Application number: 24220494.9
(22) Date of filing: 17.12.2024
(51) Int. Cl.: H01M 50/244, H01M 50/204, H01M 50/262, H01M 50/289

(54) **BATTERY PACK CASE AND BATTERY PACK**

(30) Priority: 31.05.2024 CN 202410703388; 31.05.2024 CN 202421242530 U; 09.08.2024 WO PCT/CN2024/111037
(71) Applicant: Eve Energy Co., Ltd., Huizhou, Guangdong 516006 (CN)
(72) Inventor: WENG, Xingqiu, Huizhou, Guangdong, 516006 (CN); YANG, Xingrui, Huizhou, Guangdong, 516006 (CN); YANG, Songlin, Huizhou, Guangdong, 516006 (CN)
(74) Representative: Berggren Oy

(57) **Abstract**

The disclosure provides a battery pack case (100) and a battery pack. The battery pack case (100) includes a frame (110), a bottom plate (120), and a mounting assembly (130); the bottom plate (120) is disposed facing the frame (110) and provided with a through hole (1200) and a mounting portion (121); the mounting assembly (130) includes a first connecting member (131) connected to the frame (110) and a limiting member (132), the first connecting member (131) includes an abutting surface (1311), the limiting member (132) includes a first abutting portion (1322) and a limiting portion (1323) and abuts against the abutting surface (1311); and the mounting portion (121) is disposed between the limiting portion (1323) and the abutting surface (1311), and a distance between the limiting portion (1323) and the abutting surface (1311) is greater than or equal to a thickness of the mounting portion (121).

## Description

### TECHNICAL FIELD

The disclosure relates to the field of battery, and in particular, to a battery pack case and a battery pack.

### BACKGROUND

In related art, a bottom plate of a battery pack case is connected to a frame through a mounting assembly. Generally, the mounting assembly applies a larger compressive force to the bottom plate, so as to improve the connection stability of the mounting assembly and the bottom plate.

### SUMMARY

When the mounting assembly applies a larger compressive force to the bottom plate, it may cause the bottom plate to be crushed and deform, and even cause the bottom plate to detach from the mounting assembly.

Embodiments of the present application provide a battery pack case, including:
a frame including a mounting space configured to accommodate one or more cells;
a bottom plate disposed facing the frame, in which the bottom plate is provided with a through hole and a mounting portion disposed at an edge of the through hole; and
a mounting assembly including a first connecting member and a limiting member connected to each other, in which the first connecting member is connected to the frame and includes an abutting surface facing the bottom plate; the limiting member includes a first abutting portion and a limiting portion, the first abutting portion corresponds to the through hole and abuts against the abutting surface, and the limiting portion is spaced apart from the abutting surface; and the mounting portion is disposed between the limiting portion and the abutting surface, and a distance between the limiting portion and the abutting surface is greater than or equal to a thickness of the mounting portion.

Embodiments of the present application further provide a battery pack, including:
the battery pack case as described above; and
one or more cells disposed in the mounting space of the battery pack case.

In the battery pack case provided in the embodiments of the present application, the mounting portion of the bottom plate is disposed between the limiting portion of the limiting member of the mounting assembly and the abutting surface of the first connecting member, and the distance between the limiting portion and the abutting surface is greater than or equal to the thickness of the mounting portion, so that the movement of the mounting portion in the thickness direction of the bottom plate is limited by the abutting surface and the mounting portion. Moreover, since the distance between the limiting portion and the abutting surface is greater than or equal to the thickness of the mounting portion, the abutting surface and the first connecting member may not apply a larger compressive force to the mounting portion, which can improve the problem in related art that the bottom plate of the battery pack case is easy to be crushed, deform, or detach from the mounting assembly caused by the mounting assembly applying a larger compressive force to the bottom plate.

In the battery pack including the battery pack case provided in the embodiments of the present application, the mounting portion of the bottom plate is disposed between the limiting portion of the limiting member of the mounting assembly and the abutting surface of the first connecting member, and the distance between the limiting portion and the abutting surface is greater than or equal to the thickness of the mounting portion, so that the movement of the mounting portion in the thickness direction of the bottom plate is limited by the abutting surface and the mounting portion. Moreover, since the distance between the limiting portion and the abutting surface is greater than or equal to the thickness of the mounting portion, the abutting surface and the first connecting member may not apply a larger compressive force to the mounting portion, which can improve the problem in related art that the bottom plate of the battery pack case is easy to be crushed, deform, or detach from the mounting assembly caused by the mounting assembly applying a larger compressive force to the bottom plate, thereby improving safety performance and stability of the battery pack.

### BRIEF DESCRIPTION OF THE DRAWINGS

FIG. 1 is a schematic structural diagram of a battery pack case according to some embodiments of the present application.
FIG. 2 is a cross-sectional diagram taken along direction A-A in FIG. 1.
FIG. 3 is an enlarged diagram at position A in FIG. 2.
FIG. 4 is a schematic partial cross-sectional diagram of a mounting assembly according to some embodiments of the present application.
FIG. 5 is a schematic partial exploded diagram of the battery pack case according to some embodiments of the present application.
FIG. 6 is a first schematic exploded diagram of the mounting assembly according to some embodiments of the present application.
FIG. 7 is a second schematic exploded diagram of the mounting assembly according to some embodiments of the present application.

### Reference characters:

100, battery pack case; 110, frame; 1100, mounting space; 111, cross beam; 1110, mounting hole; 112, longitudinal beam; 120, bottom plate; 1200, through hole; 121, mounting portion; 130, mounting assembly; 131, first connecting member; 1311, abutting surface; 1312, mounting groove; 1313, first sealing surface; 132, limiting member; 1320, via hole; 1322, first abutting portion; 1323, limiting portion; 1324, second abutting portion; 1325, second sealing surface; 1326, first accommodating groove; 1321, second accommodating groove; 133, first sealing member; 1331, first sealing portion; 1332, second sealing portion; 134, second sealing member; 135, second connecting member; 1351, connecting portion; 1352, reinforcing portion; 1353, fixing portion; 136, third connecting member; and 140, liquid cooling plate.

### DETAILED DESCRIPTION

In the description of the disclosure, unless otherwise specified or limited, the terms "connected", "connection", and "fixed" should be understood broadly. For example, it can be a fixed connection, a detachable connection, or an integrated unit; alternatively, it can be a mechanical connection or an electrical connection; alternatively, it can be a direct connection or an indirect connection through an intermediate medium; and alternatively, it can be an internal connection of two components or an interaction relationship between two components. For an ordinary person skilled in the art, specific meanings of the above terms in the disclosure can be understood based on specific situations.

In the disclosure, unless otherwise specified or limited, "a first feature above or below a second feature" includes a direct contact between the first feature and the second feature, or an indirect contact through another feature between the first feature and the second feature, instead of the direct contact. Moreover, the first feature is disposed "on" or "above" the second feature, indicating that the first feature is directly above or diagonally above the second feature, or simply indicating that the first feature is horizontally higher than the second feature. The phrase "the first feature is disposed below or under the second feature" indicates that the first feature is directly below or diagonally below the second feature, or simply indicates that the first feature is horizontally lower than the second feature.

In the description of the disclosure, directional or positional relationships indicated by the terms "on", "above", "below", "front", "back", "left", "right", "front", "back", and the like, are based on the directional or positional relationships illustrated in the drawings, which are used only for the convenience of describing the disclosure and simplifying the description, rather than indicating or implying that the devices or elements must have a specific direction, be constructed or operated in a specific direction. Therefore, the terms cannot be interpreted as a limitation on the disclosure. In addition, the terms "first" and "second" are used only for the purpose of description and do not have specific meanings.

In related art, a bottom plate of a battery pack case is connected to a frame through a mounting assembly. Generally, the mounting assembly applies a larger compressive force to the bottom plate, so as to improve the connection stability of the mounting assembly and the bottom plate. For example, when the mounting assembly penetrates a through hole of the bottom plate, the mounting assembly may apply a compressive force to an inner peripheral wall of the through hole of the bottom plate, so that the mounting assembly is in interference fit with the through hole; alternatively, when the mounting assembly directly locks with the bottom plate through a bolt, the bolt may apply a compressive force on the bottom plate. In the above structures, when the mounting assembly applies a larger compressive force to the bottom plate, it may cause the bottom plate to be crushed and deform, and even cause the bottom plate to detach from the mounting assembly.

In order to improve the above problem(s), the embodiments of the present application provide a battery pack case and a battery pack.

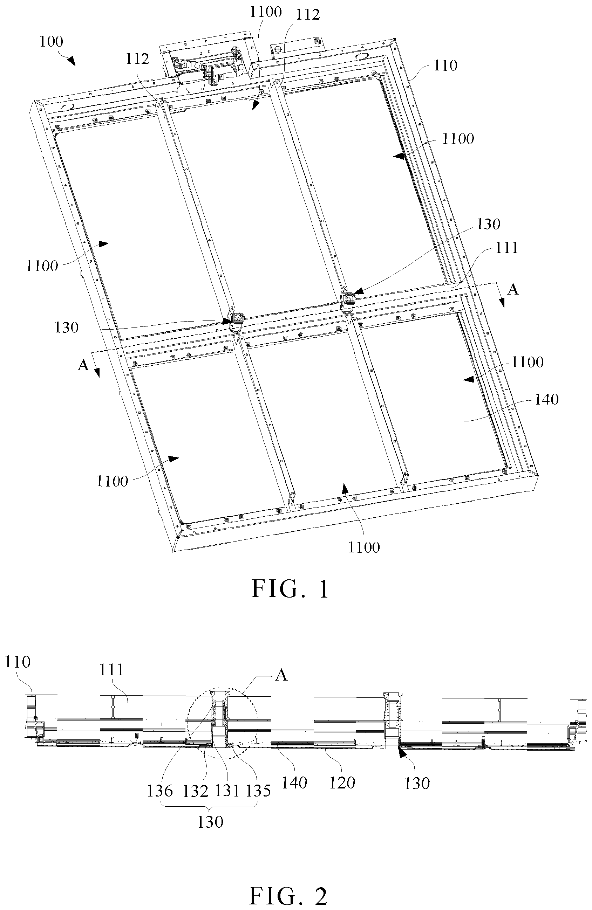

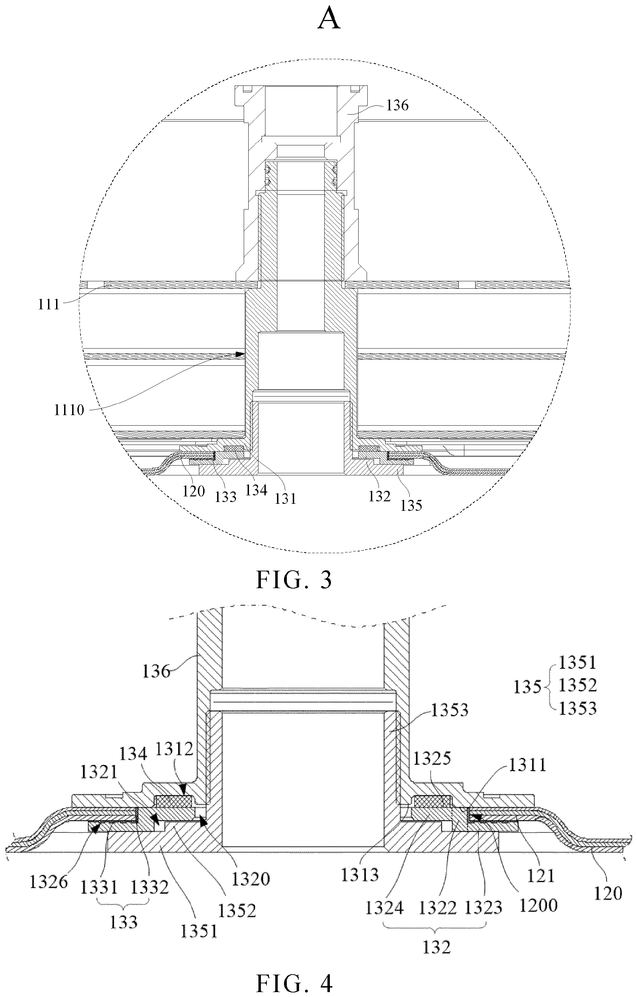

FIG. 1 is a schematic structural diagram of a battery pack case according to some embodiments of the present application, FIG. 2 is a cross-sectional diagram taken along direction A-A in FIG. 1, and FIG. 3 is an enlarged diagram at position A in FIG. 2. As illustrated in FIG. 1 and FIG. 2, a battery pack case 100 includes a frame 110, a bottom plate 120, and a mounting assembly 130, and the frame 110 is provided with a plurality of mounting spaces 1100 configured to accommodate a plurality of cells (not shown in the figures). As illustrated in FIG. 3 and FIG. 4, and a cross-sectional surface of the mounting assembly 130 is perpendicular to an abutting surface 1311 of a first connecting member 131 of the mounting assembly 130 in FIG. 4. The bottom plate 120 is disposed facing the frame 110 and provided with a through hole 1200, and the through hole 1200 penetrates the bottom plate 120 in a thickness direction of the bottom plate 120. The mounting assembly 130 is connected to the frame 110, and the mounting assembly 130 penetrates the through hole 1200 and directly or indirectly abuts against a side of the bottom plate 120 away from the frame 110, so that a part of the bottom plate 120 is mounted below the frame 110, thereby enabling the bottom plate 120 to protect other components mounted on the frame 110.

As illustrated in FIG. 2 and FIG. 3, the battery pack case 100 includes a liquid cooling plate 140 disposed at a side of the frame 110 facing the bottom plate 120. The liquid cooling plate 140 is disposed between the frame 110 and the bottom plate 120, and the liquid cooling plate 140 is configured to cool the cells in the mounting spaces 1100 of the frame 110. The bottom plate 120 is configured to protect the liquid cooling plate 140.

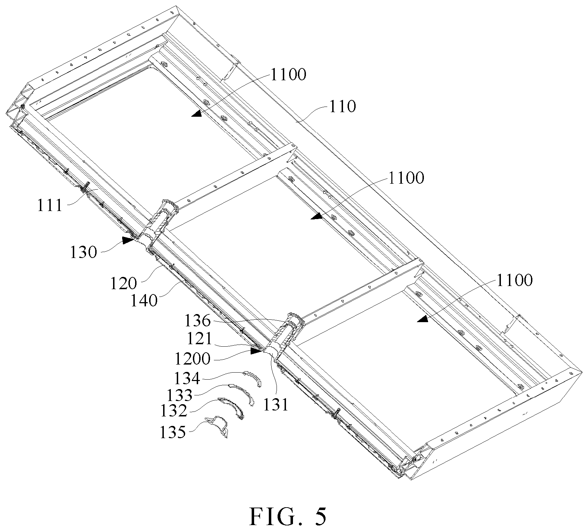

In some embodiments, as illustrated in FIGs. 3 to 7, the mounting assembly 130 includes the first connecting member 131 and a limiting member 132 connected to each other. The first connecting member 131 is connected to the frame 110, so that the mounting assembly 130 is connected to the frame 110. The first connecting member 131 includes an abutting surface 1311 facing the bottom plate 120. The limiting member 132 includes a first abutting portion 1322 and a limiting portion 1323, the first abutting portion 1322 corresponds to the through hole 1200 and abuts against the abutting surface 1311, and the limiting portion 1323 is spaced apart from the abutting surface 1311.

In the above embodiments, the first abutting portion 1322 corresponds to the through hole 1200, which indicates that, an orthographic projection of the first abutting portion 1322 on a plane perpendicular to the thickness direction of the bottom plate 120 at least partially overlaps with an orthographic projection of the through hole 1200 on the plane perpendicular to the thickness direction of the bottom plate 120, so that the first abutting portion 1322 penetrates the through hole 1200 and abuts against the abutting surface 1311; alternatively, a part of the first connecting member 131 penetrates the through hole 1200, so that the abutting surface 1311 abuts against the first abutting portion 1322; alternatively, a part of the first connecting member 131 is disposed in the through hole 1200, and the first abutting portion 1322 extends into the through hole 1200 and abuts against the abutting surface 1311.

As illustrated in FIG. 3 and FIG. 4, the bottom plate 120 includes a mounting portion 121 disposed at an edge of the through hole 1200, and the mounting portion 121 is disposed between the limiting portion 1323 and the abutting surface 1311. A distance between the limiting portion 1323 and the abutting surface 1311 is greater than or equal to a thickness of the mounting portion 121, so that movement of the mounting portion 121 in the thickness direction of the bottom plate 120 is limited by the abutting surface 1311 and the limiting portion 1323.

Moreover, since the distance between the limiting portion 1323 and the abutting surface 1311 is greater than or equal to the thickness of the mounting portion 121, the abutting surface 1311 and the first connecting member 131 may not apply a larger compressive force to the mounting portion 121, which can improve the problem in related art that the bottom plate of the battery pack case is easy to be crushed, deform, or detach from the mounting assembly caused by the mounting assembly applying a larger compressive force to the bottom plate.

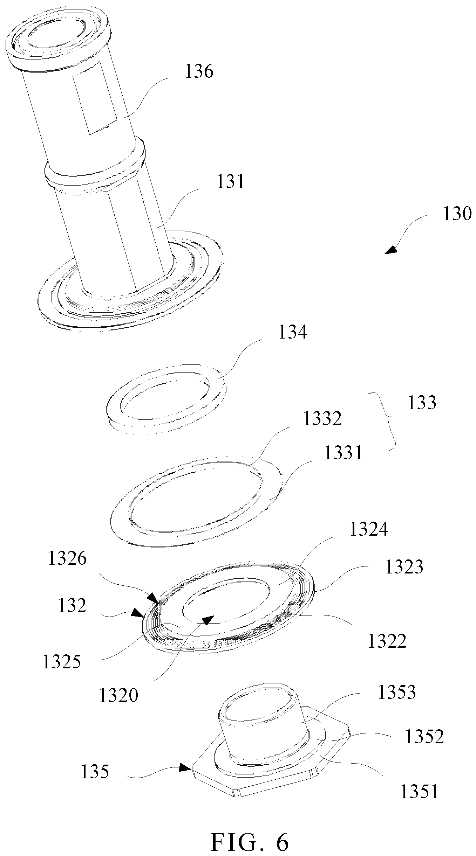

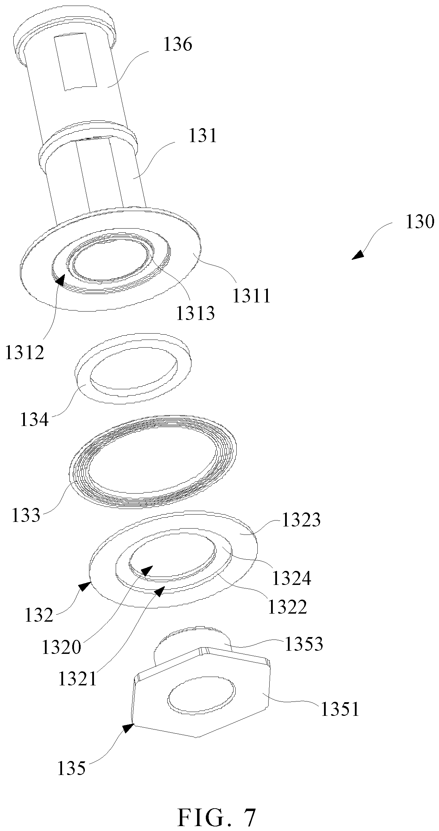

In some embodiments, as illustrated in FIG. 6 and FIG. 7, the limiting portion 1323 extends along a circumferential direction of the through hole 1200, so as to increase an abutting area between the limiting portion 1323 and the mounting portion 121, which is conducive to improving a limiting effect of the limiting portion 1323 on the mounting portion 121.

For example, the mounting portion 121 is provided as an annular structure extending in the circumferential direction of the through hole 1200, the limiting portion 1323 is provided as a plate-shaped structure, a side of the limiting portion 1323 is disposed facing the mounting portion 121, and the limiting portion 1323 is provided as an annular structure extending in the circumferential direction of the through hole 1200.

In some embodiments, as illustrated in FIGs. 3 to 7, the mounting assembly 130 includes a first sealing member 133 provided between the limiting member 132 and the mounting portion 121, so as to seal a gap between the limiting member 132 and the mounting portion 121, thereby improving sealing performance between the bottom plate 120 and the mounting assembly 130, and preventing external impurities or moisture from entering a gap between the bottom plate 120 and the frame 110 from the gap between the bottom plate 120 and the limiting member 132.

The first sealing member 133 includes a first sealing portion 1331 disposed between the limiting portion 1323 and the mounting portion 121, so as to seal a gap between the limiting portion 1323 and the mounting portion 121, thereby preventing external impurities or moisture from entering the gap between the bottom plate 120 and the frame 110 from the gap between the limiting portion 1323 and the mounting portion 121.

In some embodiments, the first sealing member 1331 extends in the circumferential direction of the through hole 1200. For example, the first sealing portion 1331 is provided as an annular structure extending in the circumferential direction of the through hole 1200, so as to further improve the sealing effect of the first sealing portion 1331 on the gap between the limiting portion 1323 and the mounting portion 121.

In some embodiments, a first accommodating groove 1326 is provided on a surface of the limiting portion 1323 facing the mounting portion 121, and at least a part of the first sealing portion 1331 is disposed in the first accommodating groove 1326. By providing at least a part of the first sealing portion 1331 disposed in the first accommodating groove 1326, the first sealing portion 1331 can be limited by the first accommodating groove 1326, making the connection between the limiting portion 1323 and the first sealing portion 1331 more stable.

During the process for assembling the bottom plate 120 and the mounting assembly 130, glues are coated on a surface of the limiting portion 1323 facing the mounting portion 121 to form the first sealing portion 1331. Since the surface of the limiting portion 1323 facing the mounting portion 121 is provided with the first accommodating groove 1326, the glues may be flow into the first accommodating groove 1326, thereby reducing a risk of overflow of the glues. Then, the limiting portion 1323 is assembled to abut against a side of the mounting portion 121 away from the frame 110. After the glues are cured, the first sealing portion 1331 made from the glues is formed between the limiting portion 1323 and the mounting portion 121.

The first accommodating groove 1326 extends in the circumferential direction of the through hole 1200. For example, the first accommodating groove 1326 is in an annular shape extending in the circumferential direction of the through hole 1200, so as to further improve the limiting effect of the first accommodating groove 1326 on the first sealing portion 1331, and further reduce the risk of overflow of the glues during the process for preparing the first sealing portion 1331. In some embodiments, the number of first accommodating grooves 1326 is plural, and a plurality of first accommodating grooves 1326 are sequentially arranged at intervals in a direction away from the through hole 1200.

In some embodiments, a thickness of the first sealing member 1331 is greater than a depth of the first accommodating groove 1326. On one hand, the first accommodating groove 1326 has a limiting effect on the first sealing portion 1332. On the other hand, a side of the first sealing portion 1322 can abut against a bottom of the first accommodating groove 1326, and another side of the first sealing portion 1322 can abut against a surface of the mounting portion 121 facing the mounting portion 1323, so that the limiting portion 1323 and the mounting portion 121 can press the first sealing portion 1332, thereby improving a sealing effect of the first sealing portion 1332 on the gap between the limiting portion 1323 and the mounting portion 121.

In some embodiments, at least a part of a surface of the limiting portion 1323 facing the mounting portion 121 is a rough surface, a side of the first sealing portion 1332 abuts against the rough surface, and another side of the first sealing portion 1332 abuts against a surface of the mounting portion 121 facing the limiting portion 1323. In the above embodiments, the limiting portion 1323 and the mounting portion 121 can press the first sealing portion 133, so that a larger frictional force is formed between the first sealing portion 1332 and the rough surface of the limiting portion 1323, thereby improving the limiting effect on the first sealing portion 1331, and making the connection between the limiting portion 1323 and the first sealing portion 1331 more stable.

In some embodiments, a difference between the distance between the limiting portion 1323 and the abutting surface 1311 and the thickness of the mounting portion 121 is greater than or equal to 0.2 mm, so that the first sealing portion 1331 with a thick thickness can be provided between the limiting portion 1323 and the mounting portion 121 after the mounting portion 121 is mounted between the limiting portion 1323 and the abutting surface 1311, thereby improving the sealing effect of the first sealing portion 1331.

For example, the difference between the distance between the limiting portion 1323 and the abutting surface 1311 and the thickness of the mounting portion 121 is 0.25mm, 0.3mm, 0.4mm, or the like, which can be determined according to structures of the limiting portion 1323, the abutting surface 1311, and the first sealing portion 1331.

As illustrated in FIG. 3 and FIG. 4, the first abutting portion 1322 penetrates the through hole 1200 and abuts against the abutting surface 1311, and the first abutting portion 1322 has a certain thickness in the thickness direction of the bottom plate 120, so that the distance between the limiting portion 1323 and the abutting surface 1311 in the thickness direction of the bottom plate 120 is equal to or greater than the thickness of the mounting portion 121. In some embodiments, both of the first connecting member 131 and the first abutting portion 1322 are inserted into the through hole 1200, and the first connecting member 131 abuts against the first abutting portion 1322. In some embodiments, the first abutting portion 1322 is disposed outside the through hole 1200, and a part of the first connecting member 131 provided with the abutting surface 1311 penetrates the through hole 1200 and abuts against the first abutting portion 1322. The present application does not limit the abutting methods between the first abutting portion 1322 and the abutting surface 1311 of the first connecting member 131, as long as the distance between the limiting portion 1323 and the abutting surface 1311 is greater than or equal to the thickness of the mounting portion 121.

In some embodiments, the first sealing member 133 further includes a second sealing portion 1332 disposed between an outer peripheral surface of the first abutting portion 1322 and an inner peripheral wall of the through hole 1200, so as to seal a gap between the outer peripheral surface of the first abutting portion 1322 and the inner peripheral wall of the through hole 1200, thereby further improving the sealing effect between the limiting member 132 and the bottom plate 120.

As illustrated in FIG. 6 and FIG. 7, the second sealing portion 1332 extends in the circumferential direction of the through hole 1200. For example, the second sealing portion 1332 is provided as an annular structure extending in the circumferential direction of the through hole 1200, so as to further improve the sealing effect of the second sealing portion 1332.

In some embodiments, as illustrated in FIG. 3 and FIG. 4, the mounting assembly 130 further includes a second sealing member 134 disposed between the limiting member 132 and the first connecting member 131, so as to seal a gap between the limiting member 132 and the first connecting member 131, thereby preventing external impurities or moisture from entering the gap between the bottom plate 120 and the frame 110 from the gap between the limiting member 132 and the first connecting member 131.

The first connecting member 131 includes a first sealing surface 1313 facing the bottom plate 120, and the limiting member 132 includes a second abutting portion 1324 that includes a second sealing surface 1325 facing the first sealing surface 1313. The second sealing portion 134 is disposed between the first sealing surface 1313 and the second sealing surface 1325, so as to seal the gap between the limiting member 132 and the first connecting member 131.

As illustrated in FIG. 3 and FIG. 4, the second sealing member 134 is provided between the first sealing surface 1313 and the second sealing surface 1325, and the second sealing member 134 abuts against at least one of the first sealing surface 1313 and the second sealing surface 1325, so as to achieve the sealing of the gap between the first connecting member 131 and the second abutting portion 1324 through the second sealing member 134.

During the process for preparing the second sealing member 134, glues are coated on at least one of the first sealing surface 1313 and the second sealing surface 1325, the first sealing surface 1313 of the first connecting member 131 is placed to be close to the second sealing surface 1325 of the second abutting portion 1324, and then the glues are cured to form the second sealing member 134.

In some embodiments, as illustrated in FIG. 3, FIG. 4, and FIG. 7, a mounting groove 1312 is provided on the first sealing surface 1313 of the first connecting member 131, and at least a part of the second sealing member 134 is disposed in the mounting groove 1312. The mounting groove 1312 has a positioning effect on the second sealing member 134, which is conducive to the stable connection of the second sealing member 134 between the first sealing surface 1313 and the second sealing surface 1325.

In some embodiments, the mounting groove 1312 is disposed on the second sealing surface 1325 of the second abutting portion 1324, and at least a part of the second sealing member 134 is disposed in the mounting groove 1312, so as to achieve the positioning effect on the second sealing member 134.

In the disclosure, alternatively, the mounting groove 1312 is provided on one of the first sealing surface 1313 of the first connecting member 131 and the second sealing surface 1325 of the second abutting portion 1324; alternatively, the mounting groove 1312 is provided on each of the first sealing surface 1313 of the first connecting member 131 and the second sealing surface 1325 of the second abutting portion 1324. The setting of the mounting groove 1312 can be selected according to the structures of the first connecting member 131 and the limiting member 132, and will be not be limited herein.

In some embodiments, as illustrated in FIG. 6 and FIG. 7, both of the second abutting portion 1324 and the second sealing member 134 extend in the circumferential direction of the through hole 1200, so as to further improve the sealing effect of the second sealing member 134 on the gap between the second abutting portion 1324 and the abutting surface 1311. For example, both of the second abutting portion 1324 and the second sealing member 134 are provided as annular structures extending in the circumferential direction of the through hole 1200, and thus, the first sealing surface 1313 and the second sealing surface 1325 are correspondingly provided as annular surfaces extending in the circumferential direction of the through hole 1200.

In some embodiments, the second abutting portion 1324 is disposed at a side of the first abutting portion 1322 away from the limiting portion 1323, that is, the second abutting portion 1324 and the limiting portion 1323 are respectively connected opposite two sides of the first abutting portion 1322. In the previous embodiments as described above, since the first abutting portion 1322 abuts against the abutting surface 1311 of the first connecting member 131, the stable connection between the first abutting portion 1322 and the first connecting member 131 can be achieved. Furthermore, in the above embodiments, by providing the second abutting portion 1324 and the limiting portion 1323 respectively connected to opposite two sides of the first abutting portion 1322, the first abutting portion 1322 can limit the elastic deformation of the second abutting portion 1324 and the limiting portion 1323, which is conducive to improving the limit effect and the sealing effect of the first sealing portion 1331 on the limiting portion 1323 and the mounting portion 121, and improving the sealing effect of the second sealing member 134 on the gap between the second abutting portion 1324 and the abutting surface 1311.

In some embodiments, the first abutting portion 1322 and the limiting portion 1323 are respectively connected to opposite two sides of the second abutting portion 1324. When the second sealing member 134 is provided between the first sealing surface 1313 and the second sealing surface 1325, the sealing of the limiting member 132 and the first connecting member 131 can be achieved.

The first abutting portion 1322 is provided as a cylindrical structure extending in the circumferential direction of the through hole 1200. The limiting portion 1323 is disposed protruding from an outer peripheral surface of the first abutting portion 1322, and the limiting portion 1323 is provided as an annular plate-shaped structure extending in the circumferential direction of the first abutting portion 1322. The limiting portion 1323 is connected to a side of the first abutting portion 1322 away from the first connecting member 131, so as to form a certain distance between the limiting portion 1323 and the abutting surface 1311, facilitating the mounting of the mounting portion 121 between the limiting portion 1323 and the abutting surface 1311.

The second abutting portion 1324 is disposed protruding from an inner circumferential surface of the first abutting portion 1322, and the second abutting portion 1324 is provided as an annular plate-shaped structure extending in a circumferential direction of the first abutting portion 1322. The second abutting portion 1324 is connected to a side of the first abutting portion 1322 close to the first connecting member 131, so as to reduce a distance between the second abutting portion 1324 and the abutting surface 1311, which is conducive to reducing a thickness of the second sealing member 134, and improving the sealing effect of the second sealing member 134 on the gap between the second abutting portion 1324 and the abutting surface 1311. Furthermore, the second sealing surface 1325 of the second abutting portion 1324 is flush with a surface of the first abutting portion 1322 facing the abutting surface 1311, and a stepped structure is formed between the first sealing surface 1313 and a surface of the limiting portion 1323 facing the mounting portion 121.

In some embodiments, as illustrated in FIGs. 3 to 7, the mounting assembly 130 further includes a second connecting member 135, the second connecting member 135 is connected to the first connecting member 131 and includes a connecting portion 1351, and the connecting portion 1351 is connected to the limiting member 132, so as to achieve the connection between the first connecting member 131 and the limiting member 132.

The connecting portion 1351 is disposed at a side of the limiting member 132 away from the abutting surface 1311 and abuts against the limiting member 132, so that the limiting member 132 is connected to the first connecting member 131. By providing the connecting portion 1351 abutting against a side of the limiting member 132 away from the first connecting member 131, movement of the limiting member 132 in a direction away from the first connecting member 131 can be limited, and thus the movement of the mounting portion 121 in a direction away from the first connecting member 131 can be limited through the limiting portion 1323.

In some embodiments, the connecting portion 1351 is disposed at a side of the first abutting portion 1322 away from the abutting surface 1311 and abuts against the first abutting portion 1322. By providing the connecting portion 1351 abutting against a side of the first abutting portion 1322 away from the abutting surface 1311, the connecting portion 1351 can apply a pushing force to the first abutting portion 1322, so that the first abutting portion 1322 can be stably abut against the abutting surface 1311 of the first connecting member 131.

In some embodiments, as illustrated in FIGs. 3 to 7, the limiting member 132 is provided with a via hole 1320, the second connecting member 135 includes a fixing portion 1353 connected to the connecting portion 1351, and the fixing portion 1353 penetrates the via hole 1320 and is connected to the first connecting member 131. The via hole 1320 is disposed in the second abutting portion 1324 and penetrates the second abutting portion 1324. The connecting portion 1351 is connected to an end of the fixing portion 1353 away from the first connecting member 131, and the connecting portion 1351 is provided as an annular structure extending in a circumferential direction of the fixing portion 1353.

In some embodiments, the fixing portion 1353 is threaded with the first connecting member 131. For example, an external thread is provided on an outer peripheral surface of the fixing portion 1353, a threaded hole adapted to the external thread is provided on a surface of the first connecting member 131 close to the second connecting member 135, and the external thread on the fixing portion 1353 is inserted into the threaded hole on the first connecting member 131, so as to achieve the threaded connection between the fixing portion 1353 and the first connecting member 131.

Alternatively, an external thread is provided on a surface of the first connecting member 131 close to the second connecting member 135, a threaded hole adapted to the external thread is provided on a surface of the fixing portion 1353 close to the first connecting portion 1351, and the external thread on the first connecting member 131 is inserted into the threaded hole on the fixing portion 1353, so as to achieve the threaded connection between the fixing portion 1353 and the first connecting member 131.

In some embodiments, as illustrated in FIG. 3, FIG. 4, and FIG. 7, a second accommodating groove 1321 is provided on a surface of the limiting member 132 away from the abutting surface 1311, and the second accommodating groove 1321 extends from an edge of the via hole 1320 of the limiting member 132 toward the first abutting portion 1322. A reinforcing portion 1352 is disposed protruding from a side of the connecting portion 1351 facing the limiting member 132, and the reinforcing portion 1352 is integrally connected to the fixing portion 1353, and at least a part of the reinforcing portion 1352 is disposed in the second accommodating groove 1321. For example, the reinforcing portion 1352, the fixing portion 1353, and the connecting portion 1351 are integrally formed, and the reinforcing portion 1352 is provided as an annular structure extending in the circumferential direction of the fixing portion 1353.

In the above embodiments, by providing the reinforcing portion 1352, the structural strength at the connection between the fixing portion 1353 and the connecting portion 1351 can be enhanced, and the connection portion between the fixing portion 1353 and the connecting portion 1351 is not easily to deform when the connecting portion 1351 applies a larger pushing force to the limiting member 132.

In some embodiments, the limiting member 132 and the second connecting member 135 are integrally formed, so that the limiting member 132 and the first connecting member 131 can be connected together when the second connecting member 135 is connected to the first connecting member 131. Alternatively, the limiting member 132 includes another fixing portion 1353 connected to the first connecting member 131, so that the limiting member 132 is connected to the first connecting member 131.

In some embodiments, as illustrated in FIGs. 1 to 3, the mounting assembly 130 further includes a third connecting member 136, and the third connecting member 136 abuts against a side of the frame 110 away from the bottom plate 120. The first connecting member 131 penetrates the frame 110 from a side of the frame 110 facing the bottom plate 120, and the first connecting member 131 is connected to the third connecting member 136, so that a part of the mounting assembly 130 is disposed below the frame 110. For example, when the mounting assembly 130 penetrates the through hole 1200 of the bottom plate 120, and the mounting assembly 130 directly or indirectly abuts against a side of the bottom plate 120 away from the frame 110, a part of the bottom plate 120 that abuts against the frame 110 is disposed below the frame 110.

In some embodiments, the frame 110 abuts against the first connecting member 131, so as to limit the movement of the first connecting member 131 relative to the frame 110 in a direction away from the bottom plate 120, so that the first connecting member 131 and the third connecting member 136 maintain a relative fixed position with the frame 110 after being connected.

The third connecting member 136 and the first connecting member 131 are connected by a threaded connection or a snap-fit connection. For example, a threaded hole is provided on a surface of the third connecting member 136 facing the frame 110, an external thread adapted to the threaded hole is provided on a surface of the first connecting member 131 away from the bottom plate 120, and the external thread on the first connecting member 131 is inserted into the threaded hole on the third connecting member 136, so as to achieve the threaded connection between the first connecting member 131 and the third connecting member 136.

In some embodiments, the frame 110 includes a cross beam 111 provided with a mounting hole 1110 penetrating the cross beam 111, the third connecting member 136 abuts against a side of the cross beam 111 away from the bottom plate 120 and corresponds to the mounting hole 1110, and the first connecting member 131 penetrates the mounting hole 1110 and is fixedly connected to the third connecting member 136. In the embodiments, by providing the cross beam 111 having higher structural strength, and the first connecting member 131 and the third connecting member 136 being fixedly connected through the cross beam 111, it is possible to reduce a deformation risk of the frame 110 under the influence of gravity of the bottom plate 120.

In some embodiments, the frame 110 includes the cross beam 111 and a plurality of longitudinal beams 112, and the cross beam 111 and the plurality of longitudinal beams 112 intersect to form the plurality of mounting spaces 1100. A plurality of mounting assemblies 130 are provided on the cross beam 111 and sequentially arranged in a length direction of the cross beam 111.

In the disclosure, the number of the mounting assemblies 130 is one or plural, which can be determined according to factors such as weight of the bottom plate 120, the mounting position of the mounting assembly 130, and the like.

In some embodiments, the bottom plate 120 is a composite plate, so as to improve the structural strength of the bottom plate 120 and reduce the weight of the bottom plate 120.

Some embodiments of the present application further provide a battery pack including a battery pack case, and the structure of the battery pack case can refer to any one of the above-mentioned embodiments. Since the battery pack adopts all technical solutions of all the above embodiments, the battery pack has at least all the beneficial effects brought by the technical solutions of the above embodiments, and will not be repeated herein.

In some embodiments, the battery pack includes the battery pack case 100 as described above and a plurality of cells, and the plurality of cells are respectively disposed in the mounting spaces 1100 of the battery pack case 100.

In the battery pack including the battery pack case 100 provided in the embodiments of the present application, the mounting portion 121 of the bottom plate 120 is disposed between the limiting portion 1323 of the limiting member 132 of the mounting assembly 130 and the abutting surface 1311 of the first connecting member 131, and the distance between the limiting portion 1323 and the abutting surface 1311 is greater than or equal to the thickness of the mounting portion 121, so that the movement of the mounting portion 121 in the thickness direction of the bottom plate 120 is limited by the abutting surface 1311 and the mounting portion 121. Moreover, since the distance between the limiting portion 1323 and the abutting surface 1311 is greater than or equal to the thickness of the mounting portion 121, the abutting surface 1311 and the first connecting member 131 may not apply a larger compressive force to the mounting portion 121, which can improve the problem in related art that the bottom plate of the battery pack case is easy to be crushed, deform, or detach from the mounting assembly caused by the mounting assembly applying a larger compressive force to the bottom plate, thereby improving safety performance and stability of the battery pack.

## Claims

1. A battery pack case (100), **characterized in that** the battery pack case (100) comprises:
a frame (110) comprising a mounting space (1100) configured to accommodate one or more cells;
a bottom plate (120) disposed facing the frame (110), wherein the bottom plate (120) is provided with a through hole (1200) and a mounting portion (121) disposed at an edge of the through hole (1200); and
a mounting assembly (130) comprising a first connecting member (131) and a limiting member (132) connected to each other, wherein the first connecting member (131) is connected to the frame (110) and comprises an abutting surface (1311) facing the bottom plate (120); and the limiting member (132) comprises a first abutting portion (1322) and a limiting portion (1323), the first abutting portion (1322) corresponds to the through hole (1200) and abuts against the abutting surface (1311), and the limiting portion (1323) is spaced apart from the abutting surface (1311);
wherein the mounting portion (121) is disposed between the limiting portion (1323) and the abutting surface (1311), and a distance between the limiting portion (1323) and the abutting surface (1311) is greater than or equal to a thickness of the mounting portion (121).

2. The battery pack case (100) of claim 1, wherein the mounting assembly (130) comprises a first sealing member (133) disposed between the limiting member (132) and the mounting portion (121).

3. The battery pack case (100) of claim 2, wherein the first sealing member (133) comprises a first sealing portion (1331) disposed between the limiting portion (1323) and the mounting portion (121); and
a first accommodating groove (1326) is provided on a surface of the limiting portion (1323) facing the mounting portion (121), and at least a part of the first sealing portion (1331) is disposed in the first accommodating groove (1326).

4. The battery pack case (100) of claim 3, wherein the first sealing portion (1331) is provided as an annular structure extending in a circumferential direction of the through hole (1200);
optionally, the first accommodating groove (1326) is in an annular shape extending in the circumferential direction of the through hole (1200); and
optionally, the first sealing portion (1331) is provided as an annular structure extending in a circumferential direction of the through hole (1200), and the first accommodating groove (1326) is in an annular shape extending in the circumferential direction of the through hole (1200).

5. The battery pack case (100) of claim 3, wherein a thickness of the first sealing portion (1331) is greater than a depth of the first accommodating groove (1326), a side of the first sealing portion (1331) abuts against a bottom of the first accommodating groove (1326), and another side of the first sealing portion (1331) abuts against a surface of the mounting portion (121) facing the limiting portion (1323).

6. The battery pack case (100) of claim 2, wherein the first sealing member (133) comprises a first sealing portion (1331) disposed between the limiting portion (1323) and the mounting portion (121); and
at least a part of a surface of the limiting portion (1323) facing the mounting portion (121) is a rough surface, a side of the first sealing portion (1331) abuts against the rough surface, and another side of the first sealing portion (1331) abuts against a surface of the mounting portion (121) facing the limiting portion (1323).

7. The battery pack case (100) of claim 2, wherein the first abutting portion (1322) penetrates the through hole (1200) and abuts against the abutting surface (1311); and
the first sealing member (133) comprises a second sealing portion (1332), the second sealing portion (1332) is disposed between an outer peripheral surface of the first abutting portion (1322) and an inner peripheral wall of the through hole (1200), and the second sealing portion (1332) is provided as an annular structure extending in a circumferential direction of the through hole (1200).

8. The battery pack case (100) of any one of claims 1 to 7, wherein the mounting assembly (130) further comprises a second sealing member (134) disposed between the limiting member (132) and the first connecting member (131).

9. The battery pack case (100) of claim 8, wherein the first connecting member (131) comprises a first sealing surface (1313) facing the bottom plate (120);
the limiting member (132) comprises a second abutting portion (1324) disposed at a side of the first abutting portion (1322) away from the limiting portion (1323), and the second abutting portion (1324) comprises a second sealing surface (1325) facing the first sealing surface (1313); and
the second sealing member (134) is disposed between the first sealing surface (1313) and the second sealing surface (1325).

10. The battery pack case (100) of claim 9, wherein a mounting groove (1312) is provided on at least one of the first sealing surface (1313) and the second sealing surface (1325), and at least a part of the second sealing member (134) is disposed in the mounting groove (1312);
optionally, both of the second sealing member (134) and the second abutting portion (1324) are provided as annular structures extending in a circumferential direction of the through hole (1200).

11. The battery pack case (100) of any one of claims 1 to 10, wherein a difference between the distance between the limiting portion (1323) and the abutting surface (1311) and the thickness of the mounting portion (121) is greater than or equal to 0.2 mm;
optionally, the mounting portion (121) is provided as an annular structure extending in a circumferential direction of the through hole (1200); and
optionally, a difference between the distance between the limiting portion (1323) and the abutting surface (1311) and the thickness of the mounting portion (121) is greater than or equal to 0.2 mm, and the mounting portion (121) is provided as an annular structure extending in a circumferential direction of the through hole (1200).

12. The battery pack case (100) of any one of claims 1 to 10, wherein the mounting assembly (130) further comprises a second connecting member (135) connected to the first connecting member (131), the second connecting member (135) comprises a connecting portion (1351) disposed at a side of the limiting member (132) away from the abutting surface (1311), and the second connecting member (135) abuts against the limiting member (132).

13. The battery pack case (100) of claim 12, wherein the connecting portion (1351) is disposed at a side of the first abutting portion (1322) away from the abutting surface (1311) and abuts against the first abutting portion (1322);
the limiting member (132) is provided with a via hole (1320), the second connecting member (135) comprises a fixing portion (1353) connected to the connecting portion (1351) and a reinforcing portion (1352), the fixing portion (1353) penetrates the via hole (1320) and is connected to the first connecting member (131), the reinforcing portion (1352) is disposed protruding from a side of the connecting portion (1351) facing the limiting member (132), and the reinforcing portion (1352) is integrally connected to the fixing portion (1353); and
a second accommodating groove (1321) is provided on a surface of the limiting member (132) away from the abutting surface (1311), and the second accommodating groove (1321) extends from an edge of the via hole (1320) toward the first abutting portion (1322); and at least a part of the reinforcing portion (1352) is disposed in the second accommodating groove (1321).

14. The battery pack case (100) of any one of claims 1 to 10, wherein the first connecting member (131) penetrates the frame (110) from a side of the frame (110) toward the bottom plate (120); and
the mounting assembly (130) further comprises a third connecting member (136), the third connecting member (136) abuts against a side of the frame (110) away from the bottom plate (120), and the third connecting member (136) is connected to the first connecting member (131).

15. The battery pack case (100) of claim 14, wherein the frame (110) comprises a cross beam (111) provided with a mounting hole (1110), the third connecting member (136) abuts against a side of the cross beam (111) away from the bottom plate (120) and corresponds to the mounting hole (1110), and the first connecting member (131) penetrates the mounting hole (1110) and is fixedly connected to the third connecting member (136).

16. A battery pack, **characterized in that** the battery pack comprises:
the battery pack case (100) as claimed in any one of claims 1 to 15; and
one or more cells disposed in the mounting space (1100).
